# EUROPÄISCHE PATENTSCHRIFT

(11) **EP 2 543 113 B1**
(45) Veröffentlichungstag und Bekanntmachung des Hinweises auf die Patenterteilung: **07.12.2016**
(21) Anmeldenummer: 11705895.8
(22) Anmeldetag: 01.03.2011
(51) Int. Cl.: H01R 9/26, H01R 13/502

(54) **ANSCHLUSSKLEMMENANORDNUNG**
TERMINAL ARRANGEMENT
DISPOSITIF DE BORNES DE CONNEXION

(30) Priorität: 01.03.2010 DE 102010009807
(43) Veröffentlichungstag der Anmeldung: 09.01.2013
(73) Patentinhaber: Phoenix Contact GmbH & Co. KG, 32825 Blomberg (DE)
(72) Erfinder: HANSES, Markus, 37671 Höxter (DE); SIMON, Wendelin, 32816 Schieder-Schwalenberg (DE); HEISE, Heinrich, 32805 Horn-Bad Meinberg (DE); WÖHRMEIER, Andreas, 32694 Dörentrup (DE)
(74) Vertreter: Michalski Hüttermann & Partner Patentanwälte mbB
(86) Internationale Anmeldenummer: PCT/EP2011/052989
(87) Internationale Veröffentlichungsnummer: WO 2011/107458

(56) Entgegenhaltungen:
- WO-A1-01/89037
- DE-A1- 10 330 631
- DE-A1- 19 747 590
- DE-A1-102004 013 757
- DE-T2- 60 000 963
- DE-U1- 29 909 766

## Beschreibung

Die Erfindung betrifft eine Anschlussklemmenanordnung, welche vorzugsweise auf einer Tragschiene anordbar ist.

Derartige Anschlussklemmenanordnungen sind vorzugsweise scheibenförmig ausgebildet, wobei mehrere Anschlussklemmenanordnungen hintereinander auf einer Tragschiene zu einer Baueinheit angeordnet sein können. Eine Anschlussklemmenanordnung weist dabei üblicherweise ein Gehäuse auf, welches aus einer ersten Gehäusehälfte und einer zweiten Gehäusehälfte zusammensetzbar ist. In dem Gehäuse sind meist mehrere Anschlussklemmen ausgebildet, welche einen Anschlussbereich zum Anschließen eines Leiters aufweisen. Das Anschließen selber erfolgt meist an einer innerhalb des Anschlussbereichs angeordneten Federkraftklemme oder einer Schraubklemme. Der Anschlussbereich ist üblicherweise durch die beiden Gehäusehälften des Gehäuses ausgebildet, so dass beim Einführen des Leiters in den Anschlussbereich es aufgrund der dabei notwendigen Krafteinwirkung auf den Anschlussbereich, die zusammengesetzten Gehäusehälften auseinandergedrückt werden können.

Aus der WO 01/89037 A1 ist eine Anschlussklemme mit einem Aufnahmemittel für ein Basiskontaktelement für einen Schraubanschluss bekannt. Der Schraubanschluss ist durch ein Modul austauschbar, wobei in dem Modul Federklemmmittel angeordnet sind und das Modul in einem Aufnahmeschacht der Anschlussklemme einrastbar ist. Die Anschlussklemmen umfasst einen Aufnahmeschacht, in dem ein Modul einrastbar ist, indem das Federklemmmittel angeordnet ist.

Des Weiteren ist aus der DE 299 09 766 Ul eine Durchgangs-Reihenklemme zum Aufrasten auf eine Tragschiene bekannt. Die Reihenklemme umfasst ein Klemmengehäuse, das zwei zueinander parallel ausgerichtete seitliche Gehäusewandungen aufweist und an der von der Tragschiene abgewandten Oberseite mit Anschlüssen zum Anschluss externer Leiter vorgesehen ist, die über eine Elektronik und/oder eine Stromschienenanordnung im Klemmengehäuse miteinander verbunden sind. Zusätzlich weist zumindest eine der beiden zueinander parallelen Gehäusewandungen wenigstens einen aus der jeweiligen Gehäusewandung austrennbaren Wandungsabschnitt oder einen Durchbruch auf.

Auch ist aus der DE 197 47 590 A1 eine Reihenklemme bekannt. Die Reihenklemme umfasst für ihre Festlegung an einem Profil ein Abstützstück und ein Klemmstück mit einer dem Benutzer zur Verfügung stehenden Steuerschraube, welche in eine in dem Klemmstück eingeschlossenen Mutter eingreift. Das Abstützstück umfasst zwei Flansche, welche zu beiden Seiten des Klemmstücks angeordnet sind und zwischen der Mutter und dem Kopf der Steuerschraube einen Bord ausbilden, welcher zumindest in seinem Scheitelbereich quer die zwei Flansche verbindet. Das Abstützstück umfasst an der Basis seines Bords an mindestens einer Seite des Schaftes der Steuerschraube und quer relativ zu diesem Schaft wenigstens eine Schulter, an welche das Klemmstück in Anlage gelangen kann.

Der Erfindung liegt daher die Aufgabe zu Grunde, eine Anschlussklemmenanordnung zur Verfügung zu stellen, bei welcher auch bei erhöhter Krafteinwirkung auf den Anschlussbereich ein Auseinanderdrücken der Gehäusehälften verhindert werden kann.

Die Lösung der Aufgabe erfolgt erfindungsgemäß durch die Merkmale des Anspruchs 1. Vorteilhafte Ausgestaltungen der Erfindung sind in den Unteransprüchen angegeben.

Die erfindungsgemäße Anschlussklemmenanordnung umfasst ein Gehäuse mit einer ersten Gehäusehälfte und einer zweiten Gehäusehälfte, wobei an dem Gehäuse mindestens eine elektrische Anschlussklemme ausgebildet ist, die Anschlussklemme einen einstückig ausgebildeten Anschlussbereich zum Anschließen eines Leiters aufweist, der Anschlussbereich wie eine übergreifendende Abdeckung ausgeführt ist, die den Anschlussbereich vollständig umgreift, die Abdeckung im Bereich der Einführung des Leiters in die Anschlussklemme eine Öffnung aufweist und/oder die Abdeckung im Bereich eines Betätigungsdrückers eine Öffnung aufweist, und die Abdeckung einstückig an die erste Gehäusehälfte oder die zweite Gehäusehälfte angeformt ist.

Der Anschlussbereich ist vorzugsweise der Bereiche der Anschlussklemme, über welchen der Leiter in die Anschlussklemme eingeführt werden kann. Die erfindungsgemäße Anschlussklemmenanordnung zeichnet sich dadurch aus, dass nunmehr der Anschlussbereich nicht mehr in zwei Hälften geteilt ist, sondern einstückig ausgebildet ist, wodurch verhindert werden kann, dass die Bereiche um den Anschlussbereich, insbesondere die Gehäusehälften, auseinandergedrückt werden. Dadurch weist der Anschlussbereich und auch die gesamte Anschlussklemmenanordnung eine höhere Stabilität auf, so dass höhere Kräfte beim Einführen eines Leiters auf den Anschlussbereich aufgebracht werden können ohne, dass die Gehäusehälften auseinandergedrückt werden.

Der Anschlussbereich selber kann dabei wie eine Art Abdeckung ausgebildet sein, um eine einstückige Ausbildung des Anschlussbereichs zu realisieren. Ferner ist es möglich, dass der einstückige Anschlussbereich zusätzlich durch eine als ein zusätzliches Bauteil ausgebildete Abdeckung, welche auf den Anschlussbereich aufsetzbar ist, ausgebildet ist, um eine zusätzliche Stabilisierung des Anschlussbereichs zu erreichen. Die Abdeckung kann dabei den Anschlussbereich vollständig umgreifen. Dadurch ist eine besonders stabile Ausbildung des Anschlussbereichs möglich. Die Abdeckung weist dabei im Bereich der Einführung des Leiters in die Anschlussklemmen eine Öffnung auf und/oder die Abdeckung weist im Bereich eines Betätigungsdrückers, wenn innerhalb des Anschlussbereichs ein Federkraftelement vorgesehen ist, eine Öffnung auf.

Der Anschlussbereich ist bevorzugt mit der ersten Gehäusehälfte oder der zweiten Gehäusehälfte verbunden. Dadurch kann der Anschlussbereich zusammen mit einer der beiden Gehäusehälften ausgeformt werden, so dass eine genaue Positionierung des Anschlussbereichs an dem Gehäuse möglich ist.

Die Abdeckung ist dabei einstückig an die erste Gehäusehälfte oder die zweite Gehäusehälfte angeformt. Dadurch kann die Abdeckung zusammen mit einer der beiden Gehäusehälften ausgeformt werden, wobei eine sehr genaue Positionierung der Abdeckung an einer der beiden Gehäusehälften erzielt werden kann. Ist der Anschlussbereich selber nicht als eine Art Abdeckung ausgebildet, sondern die Abdeckung ist um den einstückig ausgebildeten Anschlussbereich ausgebildet, so kann die Abdeckung auch einstückig mit dem Anschlussbereich ausgebildet sein.

Ferner ist es vorzugsweise vorgesehen, dass der Anschlussbereich und/oder die Abdeckung als Spritzgießbauteil ausgebildet sind. Dadurch ist eine besonders einfache Fertigung des Anschlussbereichs und/oder der Abdeckung möglich und der Anschlussbereich und/oder die Abdeckung kann in einem Stück mit einem der beiden Gehäusehälften spritzgegossen werden. Beim Spritzgießvorgang selber können bereits die vorgesehenen Öffnungen in die Abdeckung eingebracht werden, wodurch eine besonders schnelle und kostengünstige Fertigung der Anschlussklemmenanordnung ermöglicht wird.

Nachfolgend wird die Erfindung unter Bezugnahme auf die anliegenden Zeichnungen anhand einer bevorzugten Ausführungsform näher erläutert.

Es zeigen:
- Fig. 1: eine schematische Darstellung einer erfindungsgemäßen Anschlussklemmenanordnung; und
- Fig. 2: eine schematische Darstellung einer erfindungsgemäßen Anschlussklemme einer in Fig. 1 gezeigten Anschlussklemmenanordnung.

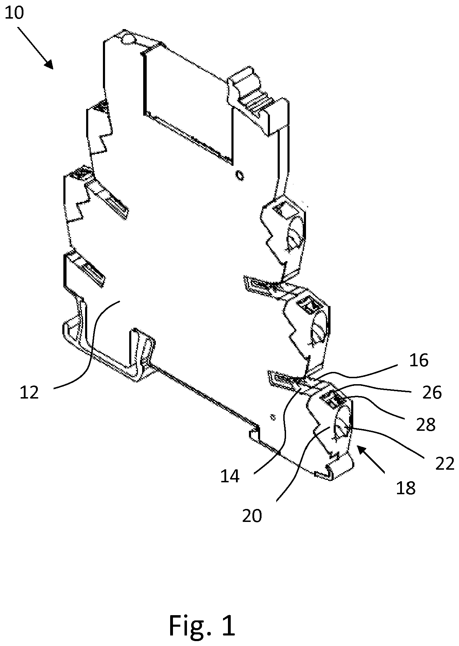

Fig. 1 zeigt eine erfindungsgemäße Anschlussklemmenanordnung 10 mit einem Gehäuse 12, welches aus einer ersten Gehäusehälfte 14 und einer zweiten Gehäusehälfte 16 ausgebildet ist, wobei die beiden Gehäusehälften 14, 16 zusammengesetzt werden, um das Gehäuse 12 zu bilden. An dem Gehäuse 12 sind mehrere elektrische Anschlussklemmen 18 ausgebildet, wobei die Anschlussklemmen 18 jeweils einen Anschlussbereich 20 zum Anschließen eines Leiters, hier nicht gezeigt, aufweisen, wobei der Anschlussbereich 20 einstückig ausgebildet ist, so dass beim Einführen eines Leiters verhindert werden kann, dass sich die Gehäusehälften 14, 16 auseinanderdrücken. Der Anschlussbereich 20 kann dabei mit einer der beiden Gehäusehälften 14, 16 verbunden sein, wobei der Anschlussbereich 20 dabei vorzugsweise in einem Stück mit einer der beiden Gehäusehälften 14, 16 ausgeformt ist.

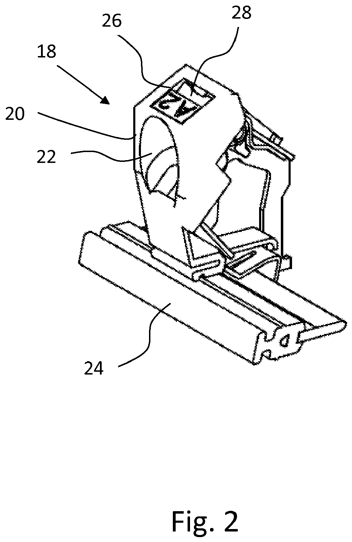

Der Anschlussbereich 20 ist bei der hier gezeigten Ausführungsform, wie insbesondere in Fig. 2 zu erkennen ist, wie eine Art übergreifende Abdeckung ausgebildet, welche sowohl einen Einführungsbereich für einen Leiter in die Anschlussklemme 18 als auch einen Bereich, an welchem ein Betätigungsdrücker 28 zum Bestätigen eines in der Anschlussklemme 18 angeordneten Federkraftelements, hier nicht gezeigt, vorgesehen ist, überspannt. Im Bereich des Einführungsbereichs eines Leiters ist in der Abdeckung eine Öffnung 22 vorgesehen, in welche ein Leiter zum Anschließen in die Anschlussklemme 18 einführbar ist. Die Öffnung 22 wird von der Abdeckung umschlossen, so dass beim Einführen des Leiters die dabei aufgebrachten Kräfte von dem einstückig ausgebildeten Anschlussbereich 20 bzw. der umschließenden Abdeckung aufgenommen werden können, und dadurch ein Übertragen der Kräfte auf die beiden Gehäusehälften 14, 16 verhindert wird. Ferner weist die Abdeckung eine zweite Öffnung 26 auf, innerhalb welcher der Betätigungsdrücker 28 angeordnet ist. Die Abdeckung und/oder der Anschlussbereich 20 sind dabei vorzugsweise als Spritzgießbauteil ausgebildet, welche in einem Fertigungsschritt mit einer der beiden Gehäusehälften 14, 16 spritzgegossen werden können. In Fig. 2 ist eine erfindungsgemäße Anschlussklemmen 18 noch einmal separat von der Anschlussklemmenanordnung gemäß Fig. 1 gezeigt, wobei unterhalb der Anschlussklemme 18 eine Öffnung ausgebildet ist, in welche eine Steckbrücke 24 eingeführt ist.

### Bezugszeichenliste

| | |
|---|---|
| Anschlussklemmenanordnung | 10 |
| Gehäuse | 12 |
| Erste Gehäusehälfte | 14 |
| Zweite Gehäusehälfte | 16 |
| Anschlussklemme | 18 |
| Anschlussbereich | 20 |
| Öffnung | 22 |
| Steckbrücke | 24 |
| Öffnung | 26 |
| Betätigungsdrücker | 28 |

## Patentansprüche

1. Anschlussklemmenanordnung, umfassend
ein Gehäuse (12) mit einer ersten Gehäusehälfte (14) und einer zweiten Gehäusehälfte (16),
wobei
an dem Gehäuse (12) mindestens eine elektrische Anschlussklemme (18) ausgebildet ist,
die Anschlussklemme (18) einen einstückig ausgebildeten Anschlussbereich (20) zum Anschließen eines Leiters aufweist,
der Anschlussbereich (20) wie eine übergreifendende Abdeckung ausgeführt ist, die den Anschlussbereich (20) vollständig umgreift, und
die Abdeckung im Bereich der Einführung des Leiters in die Anschlussklemmen (18) eine Öffnung (22) aufweist und/oder die Abdeckung im Bereich eines Betätigungsdrückers (28) eine Öffnung (26) aufweist,
**dadurch gekennzeichnet, dass**
die Abdeckung einstückig an die erste Gehäusehälfte (14) oder die zweite Gehäusehälfte (16) angeformt ist.

2. Anschlussklemmenanordnung nach Anspruch 1,
**dadurch gekennzeichnet, dass**
die Abdeckung als Spritzgießbauteil ausgebildet ist, die in einem Fertigungsschritt mit der ersten Gehäusehälfte (14) oder der zweiten Gehäusehälfte (16) spritzgegossen ist.

## Claims

1. Terminal arrangement comprising
a housing (12) having a first housing half (14) and a second housing half (16), wherein
at least one electric terminal (18) is implemented on the housing (12),
terminal (18) comprises a connection region (20) implemented as a single piece for connecting a conductor,
the connection region (20) is provided as an encompassing cover, which completely encompasses the connection region (20), and
the cover comprises an opening (22) in the region for inserting the conductor into the terminal (18) and/or the cover comprises an opening (26) in the region of a push button actuator (28),
**characterized in that**
the cover is implemented as a single piece onto the first housing half (14) or the second housing half (16).

2. Terminal arrangement according to claim 1,
**characterized in that**
the cover is implemented as an injection molded part, which is injection molded with the first housing half (14) or the second housing half (16) in a manufacturing step.

## Revendications

1. Dispositif de bornes de connexion, comprenant
un boîtier (12) avec une première moitié de boitier (14) et une seconde moitié de boîtier (16),
où
au moins une borne de connexion (18) est formée sur le boîtier (12),
la borne de connexion (18) présente une partie de connexion (20) conçue d'un seul tenant pour le branchement d'un conducteur,
la partie de connexion (20) est conçue comme un revêtement empiétant qui enveloppe totalement la partie de connexion (20), et
le revêtement présente un orifice (22) dans la partie pour l'insertion du conducteur dans la borne de connexion (18) et/ou le revêtement présente un orifice (26) dans la partie d'un bouton d'actionnement (28),
**caractérisé en ce que**
le revêtement est formé d'un seul tenant sur la première moitié de boîtier (14) ou sur la seconde moitié de boîtier (16).

2. Dispositif de bornes de connexion selon la revendication 1,
**caractérisé en ce que**
le revêtement est conçu sous la forme d'un composant moulé par injection qui est moulé par injection dans une étape de parachèvement avec la première partie de boîtier (14) ou la seconde partie de boîtier (16).
